# EUROPÄISCHE PATENTSCHRIFT

(11) **EP 1 119 092 B1**
(45) Veröffentlichungstag und Bekanntmachung des Hinweises auf die Patenterteilung: **16.03.2005**
(21) Anmeldenummer: 01100560.0
(22) Anmeldetag: 10.01.2001
(51) Int. Cl.: H02K 7/18, F16D 3/64, F02B 63/04

(54) **Kupplung eines Motors mit einem Generator**
Coupling of a motor with a generator
Accouplement d'un moteur avec un générateur

(30) Priorität: 19.01.2000 AT 802000
(43) Veröffentlichungstag der Anmeldung: 25.07.2001
(73) Patentinhaber: Jenbacher Aktiengesellschaft, 6200 Jenbach/Tirol (AT)
(72) Erfinder: Herdin, Günther, 6200 Jenbach (AT); Maderböck, Manfred, 6200 Wiesing (AT); Plohberger, Diethard, 6200 Jenbach (AT); Messner, Erich, 6200 Jenbach (AT)
(74) Vertreter: Torggler, Paul Norbert, Dr.

(56) Entgegenhaltungen:
- DE-A- 3 334 429

## Beschreibung

Die Erfindung betrifft eine Motor-Generator-Anordnung mit einem Verbrennungsmotor, dessen Abtriebswelle über eine elastische Kupplung mit der Antriebswelle des Generators verbunden ist.

Derartige Motor-Generator-Anordnungen kommen beispielsweise als Module für Blockheizkraftwerke zum Einsatz. Die elastische Kupplung erlaubt es, eine Drehelastizität zum Ausgleich von Drehmomentstößen und Dämpfung von Drehschwingungen sowie eine Radialelastizität zum Ausgleich von Wellenverlagerungen zu erzielen.

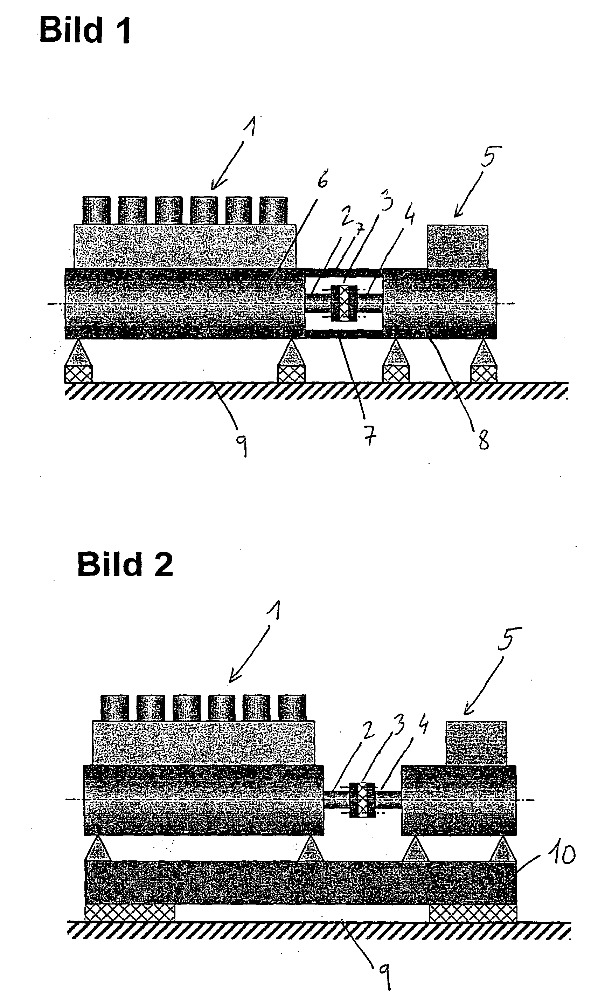

Zum Stand der Technik gehört eine Lösung, wie sie in Bild 1 dargestellt ist. Die Abtriebswelle 2 des Verbrennungsmotors 1 ist über eine elastische Kupplung 3 mit der Antriebswelle 4 des Generators 5 verbunden. Das Motorgehäuse 6 des Verbrennungsmotors 1 ist über Verbindungsteile 7 starr mit dem Generatorgehäuse 8 des Generators 5 verbunden. Die gesamte Motor-Generator-Anordnung ist elastisch auf dem Boden 9 gelagert. Durch diese Ausbildung ist eine genaue Ausrichtung des Verbrennungsmotors 1 zum Generator 5 nicht erforderlich. Nachteilig ist bei dieser Variante allerdings die Übertragung von Schwingungen über die starren Zwischenteile, welche den Generator 5 beeinträchtigen und letztlich zerstören können.

Eine solche Lösung ist in DE 3 334 429 beschrieben.

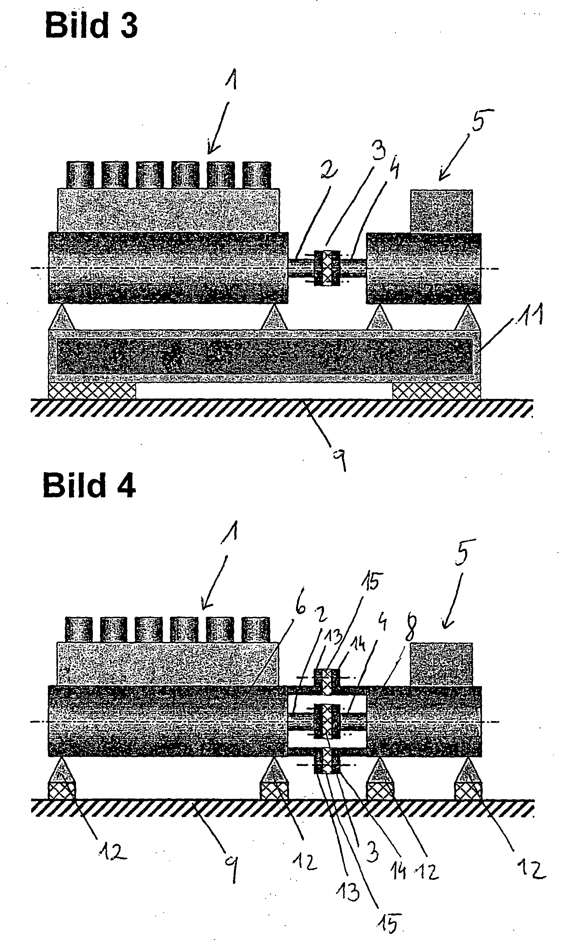

Aus diesem Grund hat man beim Stand der Technik bereits versucht, diese starren Kopplungen wegzulassen, wie dies die Varianten der Bilder 2 und 3 zum Stand der Technik zeigen. Bei der Lösung gemäß Bild 2 sind der Verbrennungsmotor 1 und der Generator 5 auf einem Fundament 10 befestigt, das seinerseits auf dem Boden 9 elastisch aufsteht.

Eine ähnliche Konstruktion zeigt das Bild 3, bei dem der Verbrennungsmotor 1 und der Generator 5 auf einem gemeinsamen steifen Rahmen 11 befestigt sind, welcher elastisch auf dem Boden 9 aufsteht.

Nachteilig an den Varianten gemäß Bild 2 und 3 ist die Tatsache, daß derartige Fundamente bzw. steife Rahmen zur Drehmomentaufnahme konstruktiv aufwendiger und teurer sind.

Aufgabe der Erfindung ist es daher, eine verbesserte Motor-Generator-Anordnung zu schaffen, die die Nachteile des Standes der Technik vermeidet.

Erfindungsgemäß wird dies dadurch erreicht, daß das Motorgehäuse des Verbrennungsmotors elastisch, vorzugsweise gummielastisch mit dem Generatorgehäuse des Generators verbunden ist. Über eine solche vorzugsweise gummielastische Verbindung zwischen Motorgehäuse und Generatorgehäuse lassen sich die geforderten Momente zwischen Motorgehäuse und Generatorgehäuse zuverlässig übertragen, gleichzeitig aber auch eine Schwingungsentkopplung zwischen Verbrennungsmotor und Generator erzielen, womit der Generator von den Motorschwingungen geschützt bleibt. Über eine solche beispielsweise als gummielastische, flexible Zwischenlage ausgebildete Kopplung lassen sich zudem teure gemeinsame drehmomentübertragende Rahmen bzw. Fundamente vermeiden.

Eine konstruktiv bevorzugte Ausführungsform besteht darin, daß am Motorgehäuse ein erster, im wesentlichen um die Abtriebswelle herum angeordneter Ringflansch angebracht ist, daß am Generatorgehäuse ein zweiter, im wesentlichen um die Antriebswelle herum angeordneter Ringflansch angebracht ist, und daß die beiden Ringflansche über zumindest einen elastischen Zwischenteil miteinander verbunden sind, wobei der elastische Zwischenteil günstigerweise eine gummielastische Elastomerschicht aufweist.

Die Schwingungsentkopplung zwischen Verbrennungsmotor und Generator kann grundsätzlich aber konstruktiv auf vielfältige Art und Weise, vorzugsweise zwischen Elastomerelementen geschehen, sodaß die Schwingungen vom Motor nicht an den Generator weitergeleitet werden. Grundsätzlich eignen sich Konstruktionen, wie sie bei elastischen Wellenkopplungen an sich bereits bekannt sind (Bolzenkopplungen, Klauenkopplungen, Wulstkopplungen, Zwischenringkopplungen, etc.)

Die Erfindung wird anhand der nachfolgenden Figurenbeschreibung noch näher erläutert.

Die bereits beschriebenen Bilder 1 bis 3 zeigen Motor-Generator-Anordnungen nach dem Stand der Technik.

Bild 4 zeigt ein Ausführungsbeispiel einer erfindungsgemäßen Motoranordnung,
Bild 5 zeigt ein Detail der elastischen Kopplung zwischen Motorgehäuse und Generatorgehäuse.

Bei dem in Bild 4 dargestellten erfindungsgemäßen Ausführungsbeispiel treibt der Verbrennungsmotor 1 über die Abtriebswelle 2 die Antriebswelle 4 eines Generators 5 an. Sowohl der Verbrennungsmotor 1 als auch der Generator 5 stehen über einfache gummigelagerte Auflagen 12 auf dem Boden 9 auf. Eine dreh- und radialelastische Kopplung verbindet die Abtriebswelle 2 mit der Antriebswelle 4.

Erfindungsgemäß ist nun vorgesehen, daß das Motorgehäuse 6 elastisch, vorzugsweise gummielastisch mit dem Generatorgehäuse 8 verbunden ist.

Dazu ist bei dem in Bild 4 dargestellten Ausführungsbeispiel am Motorgehäuse 6 im wesentlichen um die Abtriebswelle 2 herum ein erster Ringflansch 13 angeordnet. Um das Generatorgehäuse 8 ist im wesentlichen um die Antriebswelle 4 herum ein zweiter Ringflansch 14 angeordnet. Diese beiden Ringflansche 13 und 14 sind nun erfindungsgemäß über einen elastischen Zwischenteil 15 gummielastisch und schwingungsentkoppelt miteinander verbunden.

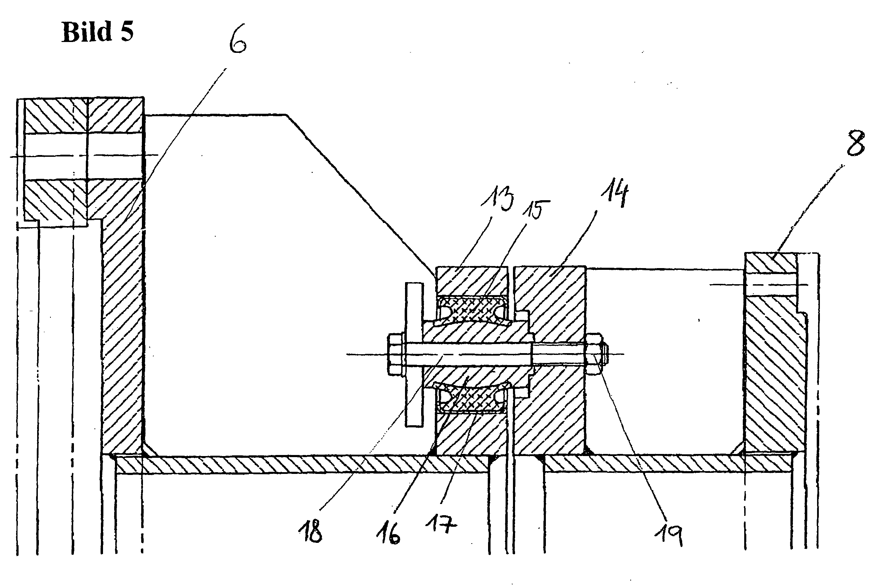

Bild 5 zeigt diese elastische, flexible Kopplung mittels einer gummielastischen Elastomerschicht 15 im Detail.

Die Elastomerschicht 15 ist auf einem Stahlkern 16 aufgebracht und von einer Hülse 17 umgeben. Der Flansch 13 des Motorgehäuses 6 und der Flansch 14 des Generatorgehäuses 8 sind über die Schraube 18 mit Mutter 19 verbunden, wobei die Schraube 18 erfindungsgemäß elastisch in der Elastomerschicht 15 gelagert ist. Insgesamt sind mehrere solcher elastisch gelagerte Schrauben über den Umfang der Flansche 13 und 14 verteilt.

Die Erfindung ist selbstverständlich nicht auf die dargestellten Ausführungsbeispiele beschränkt. Es gibt zahlreiche konstruktive Möglichkeiten, die erfindungsgemäße elastische Kopplung zwischen Motorgehäuse und Generatorgehäuse zu verwirklichen. Wesentlich dabei ist, daß diese Verbindung einerseits in der Lage sein muß, die geforderten Drehmomente zu übertragen und dabei vorzugsweise einen Achswinkelversatz möglichst klein zu halten, andererseits, vorzugsweise unter Verwendung von elastomeren Materialien, derart ausgebildet ist, daß sie Schwingungen vom Verbrennungsmotor nicht oder nur stark gedämpft an den Generator weiterleitet, und diesen damit vor schwingungsbedingten Schäden schützt. Eine aufwendige Fundament- oder Rahmenkonstruktion, wie sie beim Stand der Technik gemäß den Bildern 2 und 3 vorgesehen ist, kann dabei vermieden werden.

## Patentansprüche

1. Motor-Generator-Anordnung mit einem Verbrennungsmotor, dessen Abtriebswelle über eine elastische Kupplung mit der Antriebswelle des Generators verbunden ist, **dadurch gekennzeichnet, daß** das Motorgehäuse des Verbrennungsmotors elastisch, vorzugsweise gummielastisch mit dem Generatorgehäuse des Generators verbunden ist.

2. Motor-Generator-Anordnung nach Anspruch 1, **dadurch gekennzeichnet, daß** am Motorgehäuse ein erster, im wesentlichen um die Abtriebswelle herum angeordneter Ringflansch angebracht ist, daß am Generatorgehäuse ein zweiter, im wesentlichen um die Antriebswelle herum angeordneter Ringflansch angebracht ist, und daß die beiden Ringflansche über zumindest einen elastischen Zwischenteil miteinander verbunden sind.

3. Motor-Generator-Anordnung nach Anspruch 2, **dadurch gekennzeichnet, daß** der elastische Zwischenteil eine gummielastische Elastomerschicht aufweist.

## Claims

1. An engine-generator arrangement comprising an internal combustion engine whose output shaft is connected to the drive shaft of the generator by way of an elastic coupling, **characterised in that** the engine casing of the internal combustion engine is connected elastically, preferably rubber-elastically, to the generator casing of the generator.

2. An engine-generator arrangement according to claim 1, **characterised in that** mounted on the engine casing is a first annular flange which is arranged substantially around the output shaft, that mounted on the generator casing is a second annular flange which is arranged substantially around the drive shaft, and that the two annular flanges are connected together by way of at least one elastic intermediate member.

3. An engine-generator arrangement according to claim 2, **characterised in that** the elastic intermediate member has a rubber-elastic elastomer layer.

## Revendications

1. Dispositif moteur-générateur avec un moteur à combustion, dont l'arbre de sortie est relié au moyen d'un accouplement élastique à l'arbre d'entraînement du générateur, **caractérisé en ce que** le carter du moteur à combustion est relié de façon élastique, de préférence de façon élastique comme du caoutchouc, au carter du générateur.

2. Dispositif moteur-générateur selon la revendication 1, **caractérisé en ce qu'**une première bride annulaire, disposée essentiellement autour de l'arbre de sortie, est placée sur le carter du moteur, **en ce qu'**une seconde bride annulaire, disposée essentiellement autour de l'arbre d'entraînement, est placée sur le carter du générateur, et **en ce que** les deux brides annulaires sont reliées entre elles au moyen d'au moins une partie intermédiaire élastique.

3. Dispositif moteur-générateur selon la revendication 2, **caractérisé en ce que** la partie intermédiaire élastique présente une couche d'élastomère élastique comme du caoutchouc.
